# EUROPEAN PATENT SPECIFICATION

(11) **EP 3 352 622 B1**
(45) Date of publication and mention of the grant of the patent: **07.06.2023**
(21) Application number: 16775003.3
(22) Date of filing: 23.09.2016
(51) Int. Cl.: A46B 5/00, A46B 9/06, A46B 9/08, A46B 13/00, A46B 13/02, A46B 15/00

(54) **A ROTATABLE BRUSH FOR ANIMALS**
DREHBÜRSTE FÜR TIERE
BROSSE ROTATIVE POUR ANIMAUX

(30) Priority: 23.09.2015 SE 1551221
(43) Date of publication of application: 01.08.2018
(73) Proprietor: DeLaval Holding AB, 147 21 Tumba (SE)
(72) Inventor: RUIZ RODRIGUEZ, Juan-Miguel, 147 21 Tumba (SE)
(74) Representative: Lilliehorn, Tobias
(86) International application number: PCT/SE2016/050900
(87) International publication number: WO 2017/052460

(56) References cited:
- WO-A1-2013/176596
- WO-A1-2013/176596
- WO-A2-2012/005654
- WO-A2-2012/005654
- US-A- 6 098 635
- US-A- 6 098 635
- US-A1- 2012 174 937
- US-A1- 2012 174 937

## Description

### THE BACKGROUND OF THE INVENTION AND PRIOR ART

The present invention relates to a rotatable brush for animals, having a longitudinal length and comprising a rotatable core portion with a plurality of bristles each having a first end attached to the core portion and a second free end located in a position radially outwardly of the first end with respect to a rotation axis of the brush.

A rotatable brush for animals may be mounted to a support structure, e.g. in a barn or another area where animals are held. The rotatable brush may be driven by an electric motor, either continuously or intermittently when it comes in contact with an animal. The rotatable brush may be cylinder shaped and be provided with bristles which interact with the fur and skin of the animal. The animal is brushed, scratched and/or groomed by the rotating brush. Rotatable brushes are commonly used for short haired animals. There are concerns about the use of rotatable brushes for long haired animals due to the risk that the hair becomes entangled in the brush.

Each of EP 1 665 927 and EP 2 330 887 show an example of a brush arrangement for animals comprising a support arm to which a rotatable brush is connected. The connection between the brush and the support arm is obtained by articulation means suitable for allowing an oscillation of the brush in at least two planes orthogonal to each other. The rotatable brush comprises elongated bristles having a radial extent in relation to a rotation axis of the brush.

US 6 098 635 A discloses a rotating hair brush having extending radially from a core portion of the brush. dividers

### SUMMARY OF THE INVENTION

The invention is as defined in the appended claims. The object of the present invention is to provide a rotatable brush which is also suitable to be used by long haired animals while reducing the risk that the hair becomes entangled in the brush.

This object is achieved by the rotatable brush initially defined, which is characterized in that it comprises at least one protective element rotationally fixedly connected to the core portion, wherein the at least one protective element is plate shaped and flexible, and is extending radially outwardly from the core portion, with an inner edge portion connected to the core portion, and wherein the protective element has an outer free edge hair guiding surface portion along the longitudinal length of the brush wherein a ratio of the radial extension of the protective element from the core portion to the radial extension of the bristles from the core portion is in the range of 90-110%.

When a rotatable brush is used by an animal, a part of the hair strands will inevitably penetrate into spaces between the bristles. The risk that the hair strands get caught in the brush body formed by the bristles and gets wrapped around the rotary core portion increases with the penetration depth of the hair strands into the brush body. The protective element comprises a hair guiding surface rotating together with the bristles at a radial distance from the core portion.

In case a part of a hair strand of an animal penetrates into the brush body to a position located closer to the core portion than the hair guiding surface, the hair guiding surface will rotate, with the rotation of the core portion, and come in contact with the portion of the hair strand located at the same radial distance from the core portion as the hair guiding surface. During the following rotation movement of the hair guiding surface, it will be moved along the hair strand in a direction towards its free end. During this movement, the hair guiding surface moves the part of the hair strand successively radially outwardly to the radial position of the hair guiding surface. In the radial position defined by the protective element, there is little risk that a hair strand becomes entangled in the rotatable brush. Since the hair guiding surface has an extent along the entire longitudinal length of the brush, it will prevent entangling of hair strands along the length of the entire brush.

The protective element is a plate shaped element having an inner edge portion connected to the core portion and an outer free edge portion forming the hair guiding surface portion. Such a protective element has a simple design. The inner edge portion of the plate-shaped protective element can be attached to the core portion by various attachment means. The inner edge of the protective element may e.g. be arranged in a slot or the like of the core portion and/or fixedly attached to the core portion by welding, by an adhesive or by mechanical means.

According to an embodiment of the invention, the protective element has substantially corresponding mechanical properties as the bristles. Thus the existence of the protective element will not adversely affect the brushing properties of the bristles. The protective element may e.g. be made of a plastic material, a rubber material, a textile material or combinations thereof. Such a protective element can be manufactured at a low cost.

According to an embodiment of the invention, the brush arrangement comprises several protective elements. In certain cases, it is enough with one protective element which moves hair strands radially outwardly once per revolution of the brush. In other cases, several protective elements are preferred. The protective elements may be arranged at regular or irregular intervals around the circumference of core portion. The number of protective elements may e.g. be two, which are arranged at intervals of 180° around the circumference of the core portion, three protective elements which are arranged at intervals of 120° around the circumference of the core portion, or four protective elements which are arranged at intervals of 90° around the circumference of the core portion.

According to an embodiment of the invention, the hair guiding surface is arranged at a constant radial distance from the core portion along its entire extension. In other words, the radial extension of the protective element is constant along the length of the brush, and among one or more protective element arranged around the brush. In case the bristles form a brush body with a cylindrical shape, it is many times suitable to arrange the hair guiding surface at a constant radial distance from the core portion. In cases, when, for example, the bristles form a brush body with a varying diameter around the brush or along the brush, it may be appropriate to arrange the hair guiding surface at a varying radial distance from the core portion.

According to an embodiment of the invention, the hair guiding surface is located at a radial distance from a rotation axis of the brush which is at least twice a radial distance from an outer surface of the core portion to said rotation axis. In this case, it is possible to move the hair strands by the hair guiding surface to a radial position at a relatively long distance from the outer surface of the core portion. The risk that the hair strands become entangled in the brush decreases with an increasing radial distance between the hair guiding surface and the outer surface of the core portion. At the above defined radial distance between the hair guiding surface and the outer surface of the core portion, the risk is low that the hair strands become entangled in the brush.

According to an embodiment of the invention, the hair guiding surface of the protective element is located at a radial distance from the rotation axis which is shorter than a radial distance from the second ends of the bristles to said rotation axis. In this case, the protective elements are more or less covered by the bristles and the existence of the protective elements does not significantly affect the brush properties of the bristles. It is usually enough to move the hair strands radially outwardly to a position relatively close to the periphery of the brush body in order to avoid entangling hair in the brush. However, it is possible to arrange the hair guiding surface of the protective element at the same or at a longer radial distance from the rotation axis as the second ends of the bristles. In this case, the hair strands will be moved radially outwardly by the hair guiding surface to a radial position located at the outer ends of the bristles or even outside the brush body.

In other words, according to one embodiment of the invention the radial extension of the protective element from the core portion is less than the radial extension of the bristles from the core portion. According to another embodiment of the invention the radial extension of the protective element from the core portion is the same as the radial extension of the bristles from the core portion. According to a further embodiment of the invention the radial extension of the protective element from the core portion is longer than the radial extension of the bristles from the core portion. It is advantageous to reduce the depth of hair entering into the body of the brush, i.e. between the bristles of the brush. Thus it may be advantageous to have the one or more protective elements extending as long as possible in the radial direction without being overly exposed to wear etc.

According to an embodiment of the invention, the core portion has a tubular shape. Preferably, the core portion has an outer surface having a circular shape in a plane perpendicular to the rotation axis of the brush. A tubular-shaped core portion comprises an empty inner space which reduces the weight of the brush, but also allows for other components of the brush arrangement to be integrated in the inner space.

According to an embodiment of the invention, the brush is comprised in a brush arrangement. The brush arrangement comprises an electric motor configured to rotate the rotatable brush, a sensor and a control unit configured to receive information from the sensor and to activate the electric motor when an external force acts on the rotatable brush. The sensor may be configured to sensing when an external force acts on the rotatable brush or to detecting the presence of an animal by other means. The sensor may e.g. be arranged to detect a rotation of the brush around its longitudinal axis of rotation, or a deflection or displacement of the brush by means of the external force. Such a brush may thus be rotated by the electrical motor only at periods when an animal is present, subjecting the brush to an external force. Thus, electric energy is saved during periods when the brush is not used. According to one embodiment the electric motor and the sensor may be arranged in the empty inner space of the core portion. The brush arrangement may comprise an electric switch settable in an off position in which no electric energy is supplied to the electric motor and in an on position in which electric energy is supplied to the electric motor when an external force acts on the rotatable brush. It is easy to activate and inactivate the brush arrangement by means of such electric switch. According to another embodiment the electrical motor is arranged at one of the sides of the brush, along the longitudinal axis of rotation of the brush. Preferably the motor is arranged at the side where the brush is supported.

According to an embodiment of the invention, the brush is supported by a support arm attached to a support structure. In this case, the brush can be arranged at a suitable position in a barn or a resting area for animals. The brush arrangement may comprise a hinge arrangement allowing a pivot movement of the brush around two orthogonal pivot axes. In this case, one and the same brush may be operable to abut against substantially all surfaces of an animal in an optimal manner, on the sides and on the back and upper parts of the animal.

### BRIEF DESCRIPTION OF THE DRAWINGS

The present invention is now to be explained more closely by means of a preferred embodiment which is disclosed as an example and with reference to the attached drawings.
- Fig. 1: shows an embodiment of a brush arrangement according to the invention.
- Fig. 2: shows another embodiment of a brush arrangement according to the invention.
- Fig. 3: shows a cross section view of a brush according to a first embodiment of the invention.
- Fig. 4: shows one embodiment of attachment of a protective element to the core portion of the brush.
- Fig. 5: shows a cross section view of a brush according to a second embodiment of the invention.
- Fig. 6: shows a cross section view of a brush according to a third embodiment of the invention.

### BRIEF DESCRIPTION OF A PREFERRED EMBODIMENT OF THE INVENTION

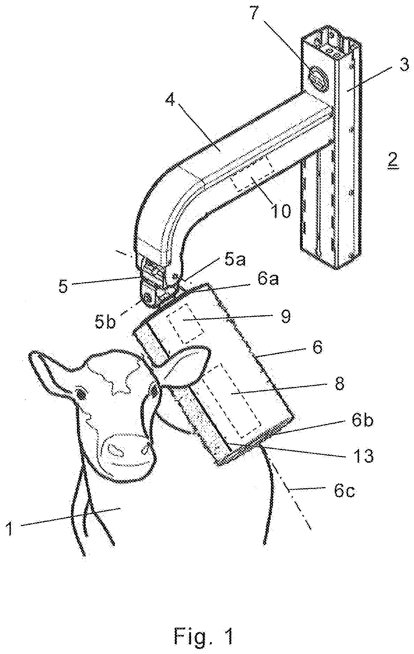

Fig. 1 shows a brush arrangement to be used by an animal 1. The brush arrangement comprises a bracket 3 to be attached to a support structure 2 such as a wall, post, beam or the like. The brush arrangement comprises a support arm 4 to be connected to the bracket 3. The support arm 4 comprises a first straight portion having a horizontal extension in a mounted state, a second curved portion and a third short straight portion having a vertical extension in a mounted state. The support arm 4 comprises a first end to be connected to the bracket 3. The support arm 4 comprises a second end to be connected to a cylindrically-shaped brush 6 via a hinge arrangement 5. The brush is provided with at least one protective element 13 as described in more detail further on. The hinge arrangement 5 comprises two orthogonal pivot axes 5a, 5b allowing a pivot movement of a brush 6 around the pivot axis 5a, 5b in relation to the support arm 4. The brush 6 has a longitudinal length between a first end 6a and a second end 6b. The brush 6 hangs vertically downwardly when no external forces act on the brush 6. In this position, the second end 6b of the brush is located vertically below the first end 6a of the brush 6. The brush 6 is rotationally arranged around a rotation axis 6c.

An electric switch 7 is arranged in the bracket 3. The electric switch 7 comprises a rotary knob or button settable in an off position and an on position. A schematically indicated electric motor 8 which drives the brush 6 and a schematically indicated sensor 9 which senses when an external force acts on the brush 6 are arranged in an inner space of the brush 6. A schematically indicated control unit 10 is configured to activate the electric motor 8 when it receives information from the sensor 9 indicating that an external force acts on the brush 6. In the embodiment shown, the control unit 10 is arranged in an inner space of the support arm 4.

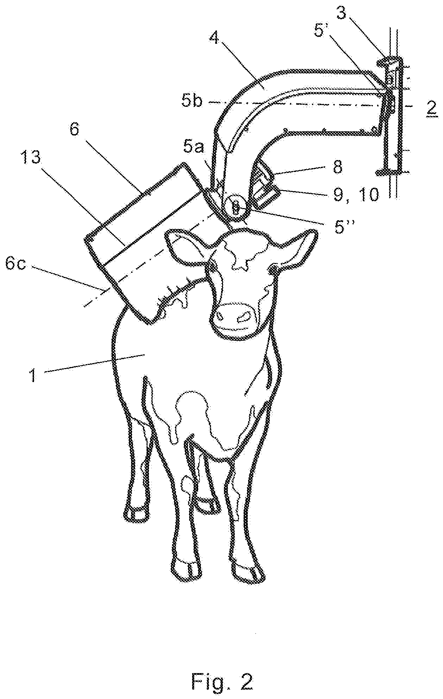

Fig. 2 shows another embodiment of a brush arrangement to be used by animals 1. The brush arrangement comprises a bracket 3 to be attached to a support structure 2 such as a wall, post, beam or the like. The brush arrangement comprises a support arm 4 pivotally connected to the bracket 3 by means of a first pivot means 5', such that the support arm is pivotable around a pivot axis 5b. The support arm 4 comprises a first straight portion having a horizontal extension in a mounted state, a second curved portion and a third short straight portion. The support arm 4 comprises a first end to be connected to the bracket 3. The support arm 4 comprises a second end to be connected to a cylindrically-shaped brush 6 via a second pivot means 5". The second pivot means 5" allows the brush 6 to pivot about a pivot axes 5a, differing from pivot axis 5b such as being orthogonal or at least close to orthogonal to the pivot axis 5b. Thus in combination, the pivot arrangement 5 comprising the first and second pivot means 5' and 5", allows a pivot movement of the brush 6 around the pivot axis 5a, 5b in relation to the support 2. The brush 6 has a longitudinal extension between a first and a second end and is rotationally arranged around a rotation axis 6c by means of an electric motor 8 which is suspended by the support arm 4 in the second pivot means 5". The rotation of the motor 8 is controlled by means of a control unit 10 connected to a sensor 9. The sensor 9 senses when an external force acts on the brush 6, such as an animal displacing or rotating the brush. The sensor may be e.g. a tilt sensor or a rotation sensor, detecting tiling or rotation of the brush by the external force.

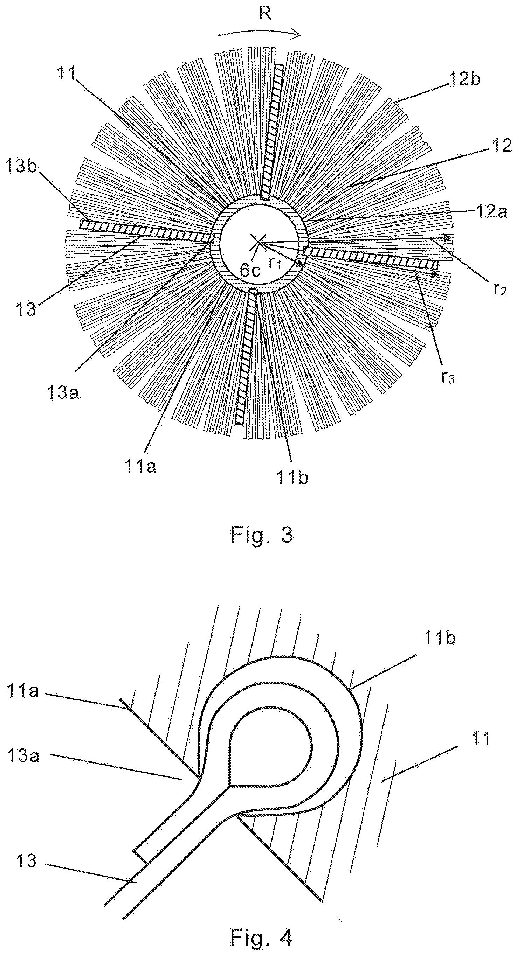

Fig. 3 shows a cross section view of a brush 6 according to a first embodiment. The brush 6 comprises a core portion 11 having a tubular shape. The core portion comprises an outer surface 11a having a circular shape in a plane perpendicular to the rotation axis 6c of the brush 6. The outer surface 11a of the core portion 11 is arranged at a first radial distance r₁ from the rotation axis 6c of the brush 6. The electric motor 8 and the sensor 9 may according to one embodiment be arranged in the inner space of the core portion 11. A plurality of bristles 12 are, at a first end 12a, connected to the core portion 11. The bristles 12 have a substantially radial extent from the first end 12a to a second free end 12b. The second end of the bristles 12b is located at a second radial distance r₂ from the rotation axis 6c.

In the embodiment shown, four flexible protective elements 13 have been attached at regular intervals around the circumference of the core portion 11. Each protective element 13 is plate- or sheet-shaped. Each protective element 13 comprises an inner edge portion 13a to be attached to the core portion 11. In the embodiment shown, the inner edge portion 13a is attached in a longitudinal slot 11b of the core portion 11 by means a suitable attachment means. The attachment means may include fastening by welding, adhesive or mechanical fastening means. As one example the protective element is configured to engage with the core portion to obtain a forms a mechanical attachment. In Fig. 4 one alternative of such a mechanical attachment means is shown in cross-section. The protective element 13 is folded along its length to form a bulge along its inner edge portion 13a. The core portion comprises a corresponding longitudinal slot 11b in the form of a C-shaped recess along its longitudinal length. The bulge of the protective element is inserted in the recess of the core portion and thus mechanically fastened in the radial direction.

In Fig. 3 the protective elements have a radial extension r₃ from the rotation center of the brush and comprises an outer portion forming a hair guiding surface portion 13b. The hair guiding surface portion 13b is formed at an outer portion of the protective element on the side of the protective element in the direction of rotation R of the brush. Thus the hair guiding surface portion 13b may be arranged at the outer portion of the protective element at the third radial distance r₃ from the rotation axis 6c. The protective elements 13 are attached at regular intervals around the outer surface 11a of the core portion 11. The plate shaped protective elements 13 may e.g. be manufactured of a plastic material, a rubber material or a textile material having flexible properties. In the embodiment shown, the protective elements forming the hair guiding surface portions 13b have a constant radial extension from the rotation axis 6c along the entire longitudinal length of the brush 6. The hair guiding surface portion 13b may be located at a third radial distance r₃ from a rotation axis 6c which is at least twice the first radial distance r₁ defined by the outer surface 11a of the core portion 11. In the embodiment shown, the hair guiding surface portion 13b is located at a third radial distance r₃ from the rotation axis 6c which is somewhat shorter than the second radial distance r₂ defined by the second ends 12b of the bristles 12.

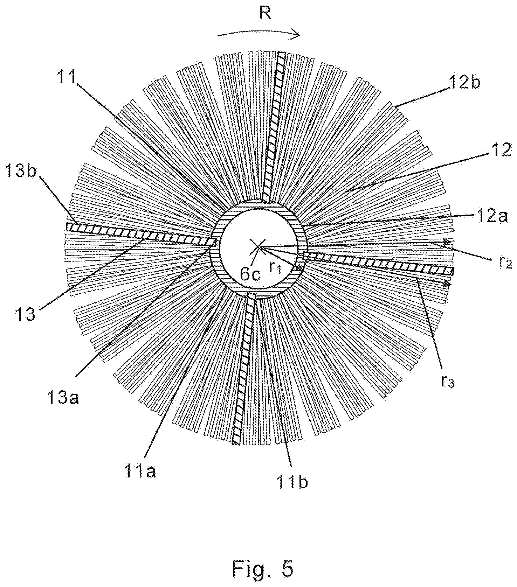

In Fig. 5 another embodiment of a brush is shown in cross-section. This embodiment differs from what is shown in Fig. 3 in that the protective element has a radial extension r₃ which is similar to, or the same as, the radial extension r₂ of surrounding bristles. When the protective band has the same or similar length as the bristles, the hair strands will not penetrate among the bristles next to the protective band.

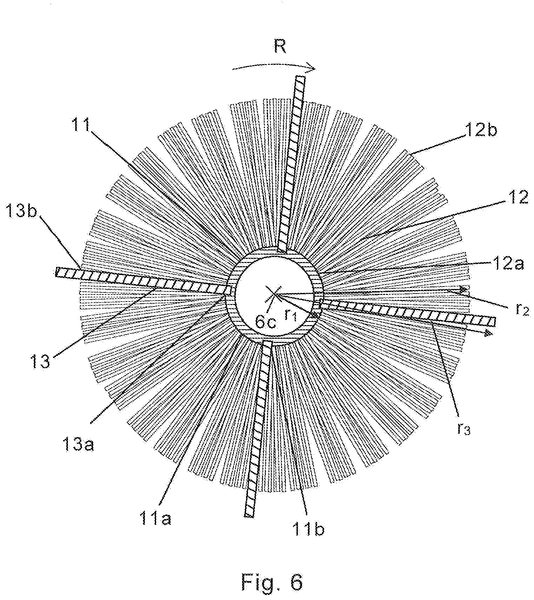

In Fig. 6 yet another embodiment of a brush is shown in cross-section. This embodiment differs from what is shown in Fig. 3 and 5 in that the protective element has a radial extension r₃ which is larger than the radial extension r₂ of surrounding bristles. Thus the protective elements extend outside the surrounding bristles and the hair guiding surface may also be located at a third radial distance r₃ which is longer than the second radial distance r₂ defined by the second ends 12b of the bristles 12. The longer the radial extension of the protective band, the less the hair strands will be able to penetrate in between the bristles of the brush, but too long and the element will bend over the bristles and may be subjected to wear and possible damage. It is advantageous to have the protective bands a bit shorter to a bit longer than the bristles, in the radial direction.

When an animal provides a pressing force on the brush 6 as described in the examples shown in Fig. 1 or Fig. 2, this is detected by the sensor 9. The sensor sends a signal to the control unit 10 which activates the electric motor 8. The electric motor provides, via suitable movement transmitting members, a rotary movement of the core portion 11. The bristles 12 and the protective elements 13, which are fixedly connected to the core portion 11, provide rotary moments in relation to the animal. At least the second ends 12b of the bristles 12 penetrate through the fur of the animals and come in contact with the skin of the animal. As a consequence, the hair strands of the fur will penetrate into the brush body formed by the bristles 12. In case the animal is long haired, the hair strands may penetrate a relatively long distance into the brush body.

The risk that the hair strands get entangled in the brush body is related to the penetration depth of the hair strands into the brush body and also other properties of the hair of the animal, such as how clean it is and how curly the hair is. In the embodiment shown, one of the rotating protective elements 13 comes almost immediately in contact with a hair strand penetrating into the brush body 12. During the following rotation movement of the hair guiding surface portion 13b, it will be moved along the hair strand in a direction towards its free end. During this movement, the hair guiding surface portion 13b moves the penetrating part of the hair strand successively radially outwardly to the radial position defined by the hair guiding surface portion 13b. The third radial distance r₃ defined by hair guiding surface portion 13b is a predetermined radial distance where the risk that the hair strands will become entangled in the rotary brush 6 is substantially eliminated. This may be at a position close to the outer ends of the bristles. The hair guiding surface portion 13b has an extent along the entire longitudinal length of the core portion 11. As a consequence, the protective elements 13 protect against entanglement of hair strands in the entire brush body.

The invention is not restricted to the described embodiment but may be varied freely within the scope of the claims. The numbers of protective elements may, for example, be varied, and the protective elements may be of different lengths or have different lengths along the longitudinal length of the core portion. The brush arrangement may be any type of brush arrangement, and the second radial distance r₂ does not need be constant around the whole core portion or along the longitudinal length of the brush.

## Claims

1. A rotatable brush (6) for animals, having a longitudinal length and comprising a rotatable core portion (11) with a plurality of bristles (12) each having a first end (12a) connected to the core portion (11) and a second free end (12b) located in a position radially outwardly of the first end (12a) with respect to a rotation axis (6c) of the brush (6), wherein the brush (6) comprises at least one protective element (13) rotationally fixedly connected to the core portion (11), wherein the at least one protective element is plate shaped and flexible, and is extending radially outwardly from the core portion (11), with an inner edge portion (13a) connected to the core portion (11), and wherein the protective element (13) has an outer free edge hair guiding surface portion (13b) along the longitudinal length of the brush, **characterized in that** a ratio of the radial extension of the protective element (13) from the core portion (11) to the radial extension of the bristles (12) from the core portion is in the range of 90-110%.

2. The brush according to claim 1, wherein the protective element (13) is made of a plastic material, a rubber material, a textile material or combinations thereof.

3. The brush according to any one of the preceding claims, comprising several protective elements (13).

4. The brush according to claim 3, wherein the protective elements (13) are arranged at regular intervals around the circumference of the core portion (11).

5. The brush according to any one of the preceding claims, wherein the hair guiding surface portion (13b) is arranged at a constant radial distance from the core portion (11) along its entire longitudinal length.

6. The brush according to any one of the preceding claims, wherein the hair guiding surface portion (13b) is located at a radial distance (r₃) from a rotation axis (6c) of the brush (6) which is at least twice a radial distance (r₁) from an outer surface (11a) of the core portion (11) to said rotation axis (6c).

7. The brush according to any one of the preceding claims, wherein the protective element (13) has a radial extension from the core portion (11) which is the same as a radial extension of the bristles (12) from the core portion.

8. The brush according to any one of the preceding claims, wherein the core portion (11) has a tubular shape.

9. A brush arrangement comprising a brush (6) according to any one of the preceding claims, wherein the brush arrangement further comprises an electric motor (8) configured to drive the rotatable brush, a sensor (9) and a control unit (10) configured to activate the electric motor (8) when it receives information from said sensor (9) indicating that an external force acts on the brush (6).

10. The brush arrangement according to claim 9, further comprising an electric switch (7) which is settable in an off position in which no electric energy is supplied to the electric motor (8) and in an on position in which electric energy is supplied to the electric motor (8) when an external force acts on the brush arrangement (6).

11. The brush arrangement according to any one of the claims 9 to 10, wherein the brush (6) is supported by a support arm (4) attached to a support structure (2).

12. The brush arrangement according to any one of the claims 9 to 11, further comprising a hinge arrangement (5) allowing a pivot movement of the brush 6 around two orthogonal pivot axes (5a, 5b).

## Patentansprüche

1. Drehbare Bürste (6) für Tiere, die eine longitudinale Länge aufweist und einen drehbaren Kernabschnitt (11) mit einer Vielzahl von Borsten (12) umfasst, wobei jede ein erstes Ende (12a), das mit dem Kernabschnitt (11) verbunden ist, und ein zweites freies Ende (12b), das in einer Stellung radial auswärts des ersten Endes (12a) hinsichtlich einer Drehachse (6c) der Bürste (6) gelegen ist, aufweist, wobei die Bürste (6) mindestens ein Schutzelement (13), das mit dem Kernabschnitt (11) drehfest verbunden ist, umfasst, wobei das mindestens eine Schutzelement plattenförmig und flexibel ist und sich von dem Kernabschnitt (11) radial auswärts erstreckt, wobei ein innerer Randabschnitt (13a) mit dem Kernabschnitt (11) verbunden ist und wobei das Schutzelement (13) einen äußeren freien Randhaarführungsoberflächenabschnitt (13b) entlang der longitudinalen Länge der Bürste aufweist, **dadurch gekennzeichnet, dass** sich ein Verhältnis der radialen Erstreckung des Schutzelements (13) von dem Kernabschnitt (11) zu der radialen Erstreckung der Borsten (12) von dem Kernabschnitt in dem Bereich von 90-110 % befindet.

2. Bürste nach Anspruch 1, wobei das Schutzelement (13) aus einem Kunststoffmaterial, einem Kautschukmaterial, einem Textilmaterial oder Kombinationen davon hergestellt ist.

3. Bürste nach einem der vorstehenden Ansprüche, umfassend mehrere Schutzelemente (13).

4. Bürste nach Anspruch 3, wobei die Schutzelemente (13) in regelmäßigen Abständen um den Umfang des Kernabschnitts (11) herum angeordnet sind.

5. Bürste nach einem der vorstehenden Ansprüche, wobei der Haarführungsoberflächenabschnitt (13b) in einer konstanten radialen Distanz von dem Kernabschnitt (11) entlang seiner gesamten longitudinale Länge angeordnet ist.

6. Bürste nach einem der vorstehenden Ansprüche, wobei der Haarführungsoberflächenabschnitt (13b) in einer radialen Distanz (r₃) von einer Drehachse (6c) der Bürste (6), der mindestens zweifach eine radiale Distanz (r₁) von einer äußeren Oberfläche (11a) des Kernabschnitts (11) zu der Drehachse (6c) beträgt, gelegen ist.

7. Bürste nach einem der vorstehenden Ansprüche, wobei das Schutzelement (13) eine radiale Erstreckung von dem Kernabschnitt (11), die die gleiche wie eine radiale Erstreckung der Borsten (12) von dem Kernabschnitt beträgt, aufweist.

8. Bürste nach einem der vorstehenden Ansprüche, wobei der Kernabschnitt (11) eine rohrartige Form aufweist.

9. Bürstenanordnung, umfassend eine Bürste (6) nach einem der vorstehenden Ansprüche, wobei die Bürstenanordnung ferner einen Elektromotor (8), der konfiguriert ist, um die drehbare Bürste anzutreiben, einen Sensor (9) und eine Steuereinheit (10), die konfiguriert ist, um den Elektromotor (8) zu aktivieren, wenn sie Informationen, die anzeigen, dass eine externe Kraft auf die Bürste (6) einwirkt, von dem Sensor (9) empfängt, umfasst.

10. Bürstenanordnung nach Anspruch 9, ferner umfassend einen elektrischen Schalter (7), der in eine Aus-Stellung, in der dem Elektromotor (8) keine elektrische Energie zugeführt wird, und in eine Ein-Stellung, in der dem Elektromotor (8) elektrische Energie zugeführt wird, wenn eine äußere Kraft auf die Bürstenanordnung (6) einwirkt, setzbar ist.

11. Bürstenanordnung nach einem der Ansprüche 9 bis 10, wobei die Bürste (6) durch einen Tragarm (4) der an einer Tragkonstruktion (2) angebracht ist, getragen wird.

12. Bürstenanordnung nach einem der Ansprüche 9 bis 11, ferner umfassend eine Gelenkanordnung (5), die eine Schwenkbewegung der Bürste 6 um zwei orthogonale Schwenkachsen (5a, 5b) ermöglicht.

## Revendications

1. Brosse rotative (6) destinée aux animaux, ayant une longueur longitudinale et comprenant une partie centrale rotative (11) avec une pluralité de crins (12) ayant chacun une première extrémité (12a) reliée à la partie centrale (11) et une seconde extrémité libre (12b) située dans une position radialement extérieure à la première extrémité (12a) par rapport à un axe de rotation (6c) de la brosse (6), dans laquelle la brosse (6) comprend au moins un élément de protection (13) solidement relié de manière rotative à la partie centrale (11), dans laquelle l'au moins un élément de protection est en forme de plaque et flexible, et s'étend radialement vers l'extérieur depuis la partie centrale (11), avec une partie de bord interne (13a) reliée à la partie centrale (11), et dans laquelle l'élément de protection (13) a une partie de surface de guidage de poils de bord libre externe (13b) le long de la longueur longitudinale de la brosse, **caractérisée en ce qu'**un rapport de l'extension radiale de l'élément de protection (13) depuis la partie centrale (11) jusqu'à l'extension radiale des crins (12) depuis la partie centrale se situe entre 90 et 110 %.

2. Brosse selon la revendication 1, dans laquelle l'élément de protection (13) est fait d'une matière plastique, d'une matière caoutchouteuse, d'une matière textile ou de combinaisons de celles-ci.

3. Brosse selon l'une quelconque des revendications précédentes, comprenant plusieurs éléments de protection (13).

4. Brosse selon la revendication 3, dans laquelle les éléments de protection (13) sont agencés à intervalles réguliers autour de la circonférence de la partie centrale (11).

5. Brosse selon l'une quelconque des revendications précédentes, dans laquelle la partie de surface de guidage de poils (13b) est agencée à une distance radiale constante depuis la partie centrale (11) le long de toute sa longueur longitudinale.

6. Brosse selon l'une quelconque des revendications précédentes, dans laquelle la partie de surface de guidage de poils (13b) est située à une distance radiale (r₃) d'un axe de rotation (6c) de la brosse (6) qui est au moins deux fois une distance radiale (r₁) d'une surface externe (11a) de la partie centrale (11) audit axe de rotation (6c).

7. Brosse selon l'une quelconque des revendications précédentes, dans laquelle l'élément de protection (13) a une extension radiale depuis la partie centrale (11) qui est la même qu'une extension radiale des poils (12) depuis la partie centrale.

8. Brosse selon l'une quelconque des revendications précédentes, dans laquelle la partie centrale (11) a une forme tubulaire.

9. Agencement de brosse comprenant une brosse (6) selon l'une quelconque des revendications précédentes, dans lequel l'agencement de brosse comprend en outre un moteur électrique (8) conçu pour entraîner la brosse rotative, un capteur (9) et une unité de commande (10) configurée pour activer le moteur électrique (8) lorsqu'elle reçoit une information dudit capteur (9) indiquant qu'une force externe agit sur la brosse (6).

10. Agencement de brosse selon la revendication 9, comprenant en outre un commutateur électrique (7) qui peut être réglé dans une position d'arrêt dans laquelle aucune énergie électrique n'est fournie au moteur électrique (8) et dans une position de marche dans laquelle de l'énergie électrique est fournie au moteur électrique (8) lorsqu'une force externe agit sur l'agencement de brosse (6).

11. Agencement de brosse selon l'une quelconque des revendications 9 à 10, dans lequel la brosse (6) est supportée par un bras de support (4) fixé à une structure de support (2).

12. Agencement de brosse selon l'une quelconque des revendications 9 à 11, comprenant en outre un agencement d'articulation (5) permettant un mouvement de pivotement de la brosse (6) autour de deux axes de pivotement orthogonaux (5a, 5b).
